# EUROPEAN PATENT APPLICATION

(11) **EP 4 382 842 A1**
(43) Date of publication of application: **12.06.2024**
(21) Application number: 22852697.6
(22) Date of filing: 22.06.2022
(51) Int. Cl.: F27B 7/08, F27B 7/20, H01B 13/00, B01J 19/24, B01F 29/60, H01M 10/0562

(54) **REACTION DEVICE, REACTION SYSTEM, BATTERY MATERIAL PRODUCING SYSTEM, BATTERY MANUFACTURING SYSTEM, SOLID ELECTROLYTE MANUFACTURING SYSTEM, AND REACTION PRODUCT MANUFACTURING METHOD**

(30) Priority: 06.08.2021 JP 2021130117
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); FURUKI, Kenichi, Tokyo 141-0032 (JP)
(74) Representative: Simmons & Simmons LLP (Munich)
(86) International application number: PCT/JP2022/024818
(87) International publication number: WO 2023/013271

(57) **Abstract**

In this reaction device (10), a kiln part (100) has: a supply port (101) for receiving raw materials supplied into one end side; a delivery port (102) for delivering a reaction product to the other end side; a cylindrical part (103) rotatably stretched and contracted along a center axis; and a baffle plate (104) provided so as to pass a central region including the center axis from the inner wall of the cylindrical part (103). A driving part (120) rotates the kiln part about the center axis. A heating part (110) heats a peripheral section of the kiln part (100). The kiln part (100) is configured so that predetermined raw materials received are conveyed to the delivery port (102) along the center axis while contacting the baffle plate (104).

## Description

### Technical Field

The present invention relates to a reaction apparatus, a reaction system, a battery material manufacturing system, a battery manufacturing system, a solid electrolyte manufacturing system, and a reaction product manufacturing method.

### Background Art

There is a reaction apparatus for continuously manufacturing a desired product by providing a predetermined atmosphere to a raw material. For example, a reaction apparatus, commonly referred to as a rotary kiln, manufactures a desired product by heating a hollow kiln part, which rotates about the central axis thereof, and making a material pass through this kiln part while tumbling the material. Further, for example, a reaction apparatus, referred to as a roller hearth kiln, manufactures a desired product by making a raw material or a workpiece pass through a tunnel-shaped kiln part. Further, various other reaction apparatuses have also been developed.

For example, Patent Literature 1 discloses the following reaction apparatus. The reaction apparatus includes a screw feeder main body that serves as a pressure reaction vessel, a catalyst supply part that feeds a catalyst into the screw feeder main body, and a lower hydrocarbon supply part that feeds a lower hydrocarbon into the screw feeder main body. Further, this reaction apparatus includes a screw that transfers generated nano-carbon, a solid discharging part that discharges a catalyst and the nano-carbon transferred by the screw, and a gas discharging part that discharges generated hydrogen from the feeder main body.

### Citation List

### Patent Literature

Patent Literature 1: Japanese Unexamined Patent Application Publication No. 2006-290682

### Summary of Invention

### Technical Problem

It should be noted that in the case of manufacturing a desired reaction product such as a solid electrolyte, it is necessary to perform, for example, a process of preparing a temperature environment exceeding 1,000°C for the raw material. When a desired reaction product is manufactured by a process involving such a temperature environment, the following problems occur. Firstly, it is difficult to enable the above-described reaction apparatus using a screw to withstand a temperature exceeding 1,000°C. Further, in the case of the roller hearth kiln, it is difficult to provide a uniform temperature to the raw material in the furnace. Meanwhile, in the case of the rotary kiln, since the whole furnace is kept at a high temperature, its thermal efficiency when providing heat to the raw material, which is tumbled and flows in the lower part of the furnace, is poor.

The present disclosure has been made to solve the above-described problems, and provides a reaction apparatus and the like capable of efficiently manufacturing a desired product.

### Solution to Problem

A reaction apparatus according to the present disclosure includes a kiln part, a driving part, and a heating part. The kiln part includes a supply port configured to receive a raw material supplied to one end side thereof, a discharge port configured to discharge a reaction product to another end side thereof, a cylindrical part extending along and rotatable around a central axis thereof, and a baffle plate provided so as to extend from an inner wall of the cylindrical part and pass through a central area of the cylindrical part including the central axis thereof. The driving part rotates the kiln part around the central axis. The heating part heats an outer peripheral part of the kiln part. The above-described kiln part is configured so that a received predetermined raw material is conveyed to the discharge port along the central axis while being in contact with the baffle plate.

In a reaction product manufacturing method according to the present disclosure, a user who manufactures a reaction product by using a reaction apparatus performs the following method. The user prepares a kiln part including a supply port configured to receive a raw material supplied to one end side thereof, a discharge port configured to discharge a reaction product to another end side thereof, a cylindrical part extending along and rotatable around a central axis thereof, and a baffle plate provided so as to extend from an inner wall of the cylindrical part and pass through a central area of the cylindrical part including the central axis thereof. The user heats an interior of the kiln part to a predetermined temperature. The user supplies the raw material from the supply port. The user rotates the kiln part around the central axis, and thereby conveys the raw material along the center axis to the discharge port while keeping the raw material in contact with the baffle plate. The user discharges the reaction product from the discharge port.

### Advantageous Effects of Invention

According to the present disclosure, it is possible to provide a reaction apparatus and the like capable of efficiently manufacturing a desired product.

### Brief Description of Drawings

Fig. 1 is a side cross-sectional view of a reaction apparatus according to a first embodiment;
Fig. 2 is a front cross-sectional view of the reaction apparatus according to the first embodiment;
Fig. 3 is a flowchart of processes performed by the reaction apparatus;
Fig. 4 is a cross-sectional view showing an example of a configuration of a heating part and baffle plates;
Fig. 5 is a side cross-sectional view of a reaction apparatus according to a second embodiment;
Fig. 6 is a front cross-sectional view of the reaction apparatus according to the second embodiment;
Fig. 7 is a side cross-sectional view of a reaction apparatus according to a third embodiment;
Fig. 8 is a front cross-sectional view of the reaction apparatus according to the third embodiment;
Fig. 9 is a configuration diagram of a reaction system according to a fourth embodiment;
Fig. 10 is a configuration diagram of a reaction system according to a fifth embodiment; and
Fig. 11 is a configuration diagram of a battery material manufacturing system according to a sixth embodiment.

### Description of Embodiments

The present disclosure will be described hereinafter through embodiments of the disclosure, but the disclosure according to the claims is not limited to the below-shown embodiments. Further, all the components/structures described in the embodiments are not necessarily indispensable as means for solving the problem. For clarifying the explanation, the following description and the drawings are partially omitted and simplified as appropriate. Note that the same reference numerals (or symbols) are assigned to the same elements throughout the drawings and redundant descriptions thereof are omitted as appropriate.

### <First Embodiment>

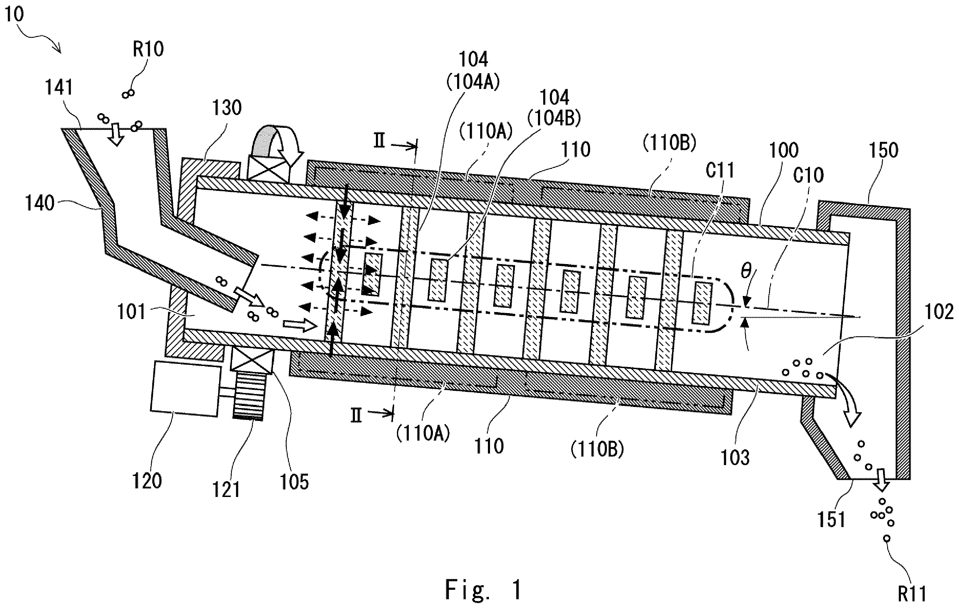

A configuration of main components/structures of a reaction apparatus according to a first embodiment will be described with reference to Fig. 1. Fig. 1 is a side cross-sectional view of a reaction apparatus 10 according to the first embodiment. The reaction apparatus 10 is an apparatus for manufacturing a reaction product by applying a predetermined physical stimulus or the like to a raw material.

The type and state of the raw material or the reaction product are not limited to any particular types and states. For example, it may be an inorganic substance such as a metal oxide or a metal sulfide containing lithium as one of its components, or may be an organic substance such as a hydrocarbon. Further, the shape and size of the raw material or the reaction product are not limited to any particular shapes and sizes. When the raw material or the reaction product has a lump-like shape, its diagonal length is preferably 0.1 to 50 mm, and more preferably 1 to 20 mm. Further, when the raw material or the reaction product has a lump-like shape, a ratio between diagonal lengths (i.e., aspect ratio) is preferably 1 to 10, and more preferably 1.3 to 1.8. The reaction apparatus 10 includes, as its main components/structures, a kiln part 100, a driving part 120, and a heating part. Further, in addition to the aforementioned components/structures, the reaction apparatus 10 includes a hood 130, a feeder 140, and a kiln foot 150.

The kiln part 100 includes, as its main components/structures, a supply port 101, a discharge port 102, a cylindrical part 103, and baffle plates 104. The supply port 101 receives a raw material supplied to one end side of the kiln part 100. The discharge port 102 discharges a reaction product to the other end side of the kiln part 100. The cylindrical part 103 is a cylindrical member including the supply port 101 on one end side thereof and the discharge port 102 on the other end side thereof, and extends along and is rotatable around a central axis C10.

The baffle plates 104 are provided so as to extend from the inner wall of the cylindrical part 103 and pass through a central area C11 of the cylindrical part 103 including the central axis C10 thereof. The heating part 110 can heat the internal temperature of the kiln part 100 from a room temperature to 1,500°C. Therefore, each of the baffle plates 104 is formed of, for example, a member of which a contact surface that comes into contact with a raw material R10 contains carbon or ceramic.

Note that the central area C11 is, for example, an area having a diameter that is a half of that of a circle formed by the inner wall of the cylindrical part 103. A plurality of baffle plates 104 are provided along the central axis C10 inside the kiln part 100. More specifically, the baffle plates 104 shown in Fig. 1 include rectangle-columnar baffle plates 104A extending in a direction perpendicular to the central axis C10, and baffle plates 104B which have the same shape as that of the baffle plates 104A and extend in a direction different from the direction in which the baffle plates 104A extend. Note that the number of baffle plates 104 may be at least one. Further, in the following description, the term "baffle plates 104" may include both baffle plates 104A and baffle plates 104B.

The kiln part 100 provides, to a raw material it has received, a predetermined temperature in a range from a room temperature to 1,500°C. Therefore, the main part of the kiln part 100 is formed of a member capable of withstanding this temperature. That is, the member constituting the kiln part 100 is ceramic or carbon. Alternatively, the member constituting the kiln part 100 may be an alloy mainly composed of nickel or chromium.

The kiln part 100 may be disposed in an inclined position so that the supply port side of the cylindrical part 103 is higher than the discharge port side thereof. In the kiln part 100 shown in Fig. 1, the central axis C10 of the cylindrical part 103 is inclined at a predetermined angle θ from the horizontal direction. In this way, the kiln part 100 is configured so that the received predetermined raw material is conveyed to the discharge port 102 along the central axis C10 while being in contact with the baffle plates 104. Note that the angle θ may be selected from a range of -90 degrees to +90 degrees.

In the kiln part 100 shown in Fig. 1, the hood 130 is engaged with the supply port 101. The hood 130 rotatably supports the kiln part 100 on the supply port 101 side and also supports the feeder 140. The feeder 140 receives the raw material R10 from a raw material charging port 141, which is an opening formed in an upper part of the feeder 140, and guides the received raw material R10 to the supply port 101.

Further, in the kiln part 100, the kiln foot 150 is engaged with the discharge port 102. The kiln foot 150 rotatably supports the side of the kiln part 100 on which the discharge port 102 is located, and discharges a reaction product R11 discharged from the discharge port 102 from a reaction product outlet 151.

The driving part 120 includes a motor and a driving force transmission part 121 which is engaged with a driving shaft projecting from the motor. In the driving part 120, the driving force transmission part 121 drives a driven part 105 and thereby rotates the kiln part 100. The driving force transmission part 121 and the driven part 105 are, for example, cogwheels configured to be engaged with each other. By the above-described configuration, the driving part 120 rotates the kiln part 100 around the central axis C10. In this way, the kiln part 100 conveys the raw material R10 received from the supply port 101 to the discharge port 102 while tumbling the raw material R10.

The heating part 110 heats an outer peripheral part of the kiln part 100. The heating device heats it, for example, in a range from a room temperature to about 1,500°C. The heating part 110 includes, for example, a heating device so as to surround the cylindrical kiln part 100. Examples of heating devices include various temperature-controllable heaters such as a sheath heater, a coil heater, and a ceramic heater. Alternatively, the heating device may be one that heats a fluid by burning gas and circulates the heated fluid. The heating part 110 may include a control device for controlling the temperature of the kiln part 100. For example, the heating part 110 may include a thermometer for monitoring a temperature at a predetermined point in the kiln part 100.

Further, a plurality of heating parts 110 may be provided along the direction in which the kiln part 100 extends. For example, the reaction apparatus 10 may include a first heating part 110A at a position relatively close to the supply port 101 and away from the supply port 101, and a second heating part 110B at a position relatively closer to the discharge port 102 than the first heating part 110A is. In this case, for example, the internal temperature at the supply port 101 is a room temperature in the area of the supply port 101. Further, the first heating part 110A controls the internal temperature of the kiln part 100 to, for example, 500°C. Further, the second heating part 110B controls the internal temperature of the kiln part 100 to, for example, 1,500°C. In this case, the reaction apparatus 10 can degrease the raw material R10 in the area where the temperature is set (to 500°C) by the first control device, and can sinter the raw material R10 in the area when the temperature is set (to 1,500°C) by the second control device. As described above, the reaction apparatus 10 can set, by including the plurality of heating parts 110, a plurality of temperature profiles along the direction in which the kiln part 100 extends.

By the above-described configuration, the reaction apparatus 10 rotates the kiln part 100 and heats the kiln part 100. When the outer peripheral part of the kiln part 100 is heated by the heating part 110, the kiln part 100 conducts this heat toward the central area C11. In the figure, thick solid arrows indicate a state in which the heat of the heating part 110 is transferred to the cylindrical part 103 and the baffle plates 104. When the heat is transferred to the cylindrical part 103 and the baffle plates 104, this heat is radiated to the inside of the kiln part 100. Dotted arrows shown in the figure indicate a state in which the heat is radiated from the baffle plates 104. As shown in the figure, the reaction apparatus 10 can efficiently heat the interior of the kiln part 100 through the baffle plates 104.

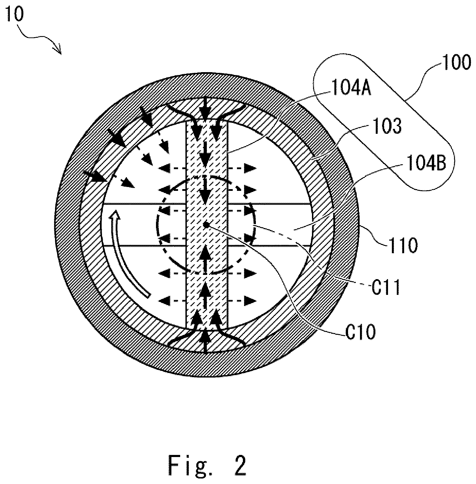

Next, the kiln part 100 will be further described with reference to Fig. 2. Fig. 2 is a front cross-sectional view of the reaction apparatus according to the first embodiment. Fig. 2 is a cross-sectional view taken along a line II-II in Fig. 1, observed in a direction parallel to the central axis C10. The kiln part 100 is rotated (clockwise) around the central axis C10 in a direction indicated by an outlined arrow shown in the figure.

The heating part 110 is disposed around the kiln part 100. The heating part 110 heats the outer periphery of the cylindrical part 103. Note that the heating part 110 itself may rotate with the kiln part 100, or may not rotate so as not to interfere with the rotation of the kiln part 100.

The baffle plates 104A of the kiln part 100 are provided so as to bridge (i.e., connect) opposing parts in the inner diameter part of the cylindrical part 103. That is, each of the baffle plates 104A passes through the central area C11 and bridges (i.e., connects) predetermined opposing parts on the inner wall of the cylindrical part 103. Similarly to the baffle plates 104, the baffle plates 104B are provided so as to bridge (i.e., connect) opposing parts in the inner diameter part of the cylindrical part 103 at places away from the baffle plates 104A. However, as shown in the figure, both the baffle plates 104A and 104B extend in the radial directions of the cylindrical part 103, but they extend in directions perpendicular to each other.

Thick solid arrows shown in Fig. 2 partially show an example of a state in which heat generated by the heating part 110 is transferred to the kiln part 100. Further, dotted arrows show an example of heat that is radiated to the inside of the kiln part 100. When the heating part 110 heats the outer peripheral part of the cylindrical part 103, the heat is transferred from the cylindrical part 103 to the baffle plates 104. The heat transferred to the cylindrical part 103 and the baffle plates 104 is radiated to the inside of the kiln part 100. As described above, in the kiln part 100, the baffle plates 104, which pass through the central area C11, radiate the heat generated by the heating part 110 to the central area C11. As a result, it is possible to efficiently heat the whole interior of the kiln part 100. Therefore, the reaction apparatus 10 can efficiently apply the heat to the raw material R10 and thereby accelerate the reaction.

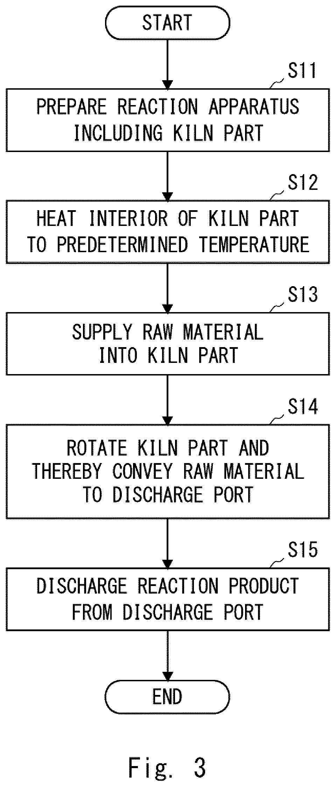

Next, processes performed by the reaction apparatus 10 will be described with reference to Fig. 3. Fig. 3 is a flowchart of processes (i.e., a method for manufacturing a reaction product) performed by the reaction apparatus. For example, a user who manufactures a reaction product by using the reaction apparatus 10 performs the flowchart shown in Fig. 3 by using the reaction apparatus 10.

Firstly, the user prepares a reaction apparatus 10 including a kiln part 100 (Step S11). The reaction apparatus 10 prepared by the user has the above-described configuration.

Next, the user operates the reaction apparatus 10, and thereby makes the heating part 110 heat the kiln part 100. That is, the heating part 110 heats the interior of the kiln part 100 to a predetermined temperature (Step S12).

Next, the user supplies a raw material R10 from the supply port 101 into the kiln part 100 (Step S13). Note that the user supplies the raw material R10 to the supply port 101 by charging the raw material R10 into the feeder 140.

Next, the user rotates the kiln part 100 by operating the reaction apparatus 10. The reaction apparatus 10 rotates the kiln part 100 by driving the driving part 120. As a result, the reaction apparatus 10 conveys the raw material R10 to the discharge port 102 while keeping the raw material R10 in contact with the baffle plates 104 (Step S14).

Next, the user makes the reaction apparatus 10 discharge the reaction product from the discharge port 102 (Step S15).

The method for manufacturing a reaction product performed by the reaction apparatus 10 has been described above. The above-described method is shown along the flow in which the reaction apparatus 10 manufactures a reaction product R11 from a raw material R10 and discharges the manufactured reaction product R11. However, the reaction apparatus 10 may, for example, start the rotation of the kiln part 100 in the step S14 before performing the step S13.

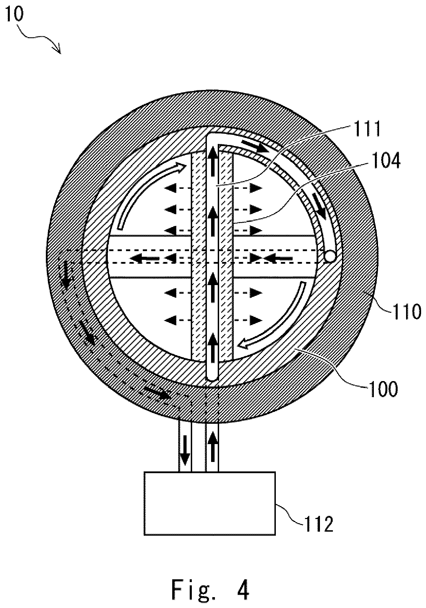

Next, an example of a configuration of the heating part 110 and baffle plates 104 will be described with reference to Fig. 4. Fig. 4 is a cross-sectional view showing an example of a configuration of a heating part 110 and baffle plates 104. In the example shown in Fig.
4, the baffle plate 104 (i.e., each of baffle plates 104) includes, inside thereof, a circulation path through which a fluid of which the temperature is controlled by the heating part 110 is circulated. Further, the heating part 110 includes a heating fluid circulation part 112. The heating fluid circulation part 112 controls the temperature of a predetermined fluid and circulates this fluid through the kiln part 100. More specifically, for example, the heating fluid circulation part 112 heats or cools this fluid so that the temperature of the fluid becomes to a predetermined temperature between a room temperature and 1,500°C. The fluid, of which the temperature is controlled by the heating fluid circulation part 112, circulates through the kiln part 100 through a flow path 111 provided inside the cylindrical part 103 and the baffle plates 104, so that the fluid is able to exchange heat appropriately therein. In this way, the heating part 110 can heat or cool the kiln part 100.

The fluid, of which the temperature is controlled by the heating fluid circulation part 112, is oil, gas, or the like. The kiln part 100 includes, for example, an inlet or an outlet of the flow path 111 at both ends of the kiln part 100 in the direction of the central axis C10. The inlet and outlet of the flow path 111 are configured so that the fluid can enter and exit the kiln part 100 while the kiln part 100 is rotating. In this way, for example, heat is exchanged between the baffle plates 104 and the raw material R10 that is in contact with the surfaces of the baffle plates 104, and the internal space of the kiln part 100 is heated or cooled. Therefore, the reaction apparatus 10 can efficiently control the temperature of the interior of the kiln part 100.

The first embodiment has been described above. As described above, the reaction apparatus 10 can, by including the baffle plates 104, efficiently heat the interior of the kiln part 100. As a result, regarding the raw material R10, for example, it is possible to design a kiln part 100 having a smaller size than when no baffle plate 104 is used.

Note that the arrangement and shape of the baffle plates 104 are not limited to the above-described arrangement and shape. For example, as described above, each of the baffle plates 104 may form a beam that extends across the central axis C10 so as to connect two opposing parts on the inner wall of the cylindrical part 103 to each other. Alternatively, each of the baffle plates 104 may have such a shape that it closes an area of 1/3 or larger of the area inside the cylinder when the cylindrical part 103 is projected onto a plane perpendicular to the central axis C10. Further, the shape of each of the baffle plates 104 is not limited to the rectangular column. That is, it may have any shape. By the above-described configuration, the baffle plates 104 efficiently radiate heat to the inside of the kiln part 100. Further, each of the baffle plates 104 may include a member mainly composed of a metal in the inner layer of the contact surface thereof that comes into contact with the raw material R10. In this way, the baffle plates 104 can efficiently transfer the heat generated by the heating part 110 to the central area C11. As described above, according to the first embodiment, it is possible to provide a reaction apparatus and the like capable of efficiently manufacturing a desired product.

### <Second Embodiment>

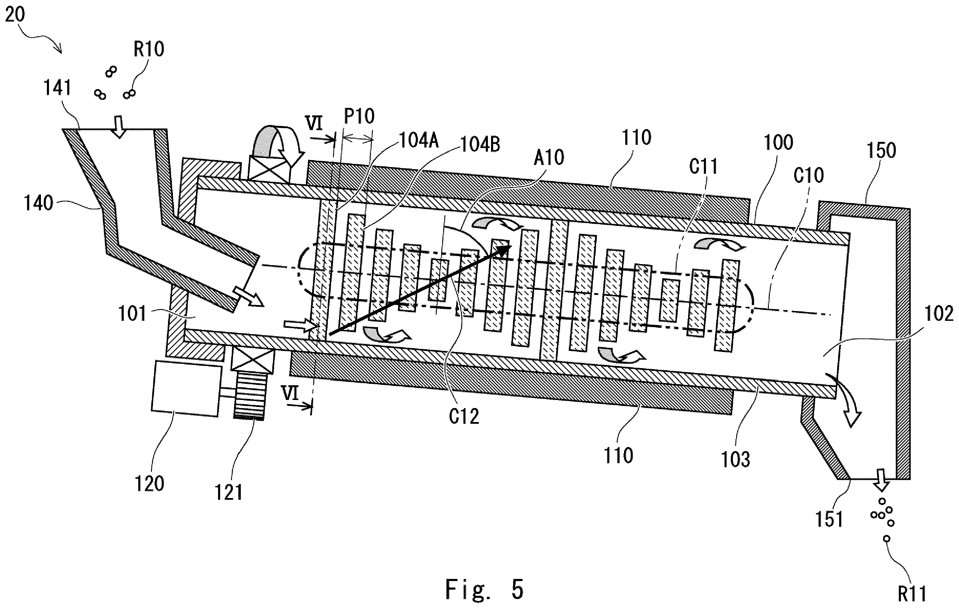

Next, a second embodiment will be described. Fig. 5 is a side cross-sectional view of a reaction apparatus 20 according to the second embodiment. In the reaction apparatus 20 shown in Fig. 5, the configuration of the baffle plates 104 is different from that in the reaction apparatus 10 shown in Fig. 1.

The baffle plates 104 shown in Fig. 5 are arranged along the central axis C10 at intervals of a pitch P10. Further, the baffle plates 104 are arranged along the central axis C10 in such a manner that they are twisted (i.e., circumferentially shifted) from one to another at a predetermined angle. That is, in the reaction apparatus 20, a plurality of baffle plates 104 are formed in a helical manner on the inner wall in the kiln part 100. The lead angle of the helix formed by the baffle plates 104 may be defined by a line connecting positions where baffle plates 104 adjacent to each other are erected (i.e., vertically formed) on the inner wall of the cylindrical part 103. The baffle plates 104 in the kiln part 100 shown in Fig. 5 have a lead angle A10.

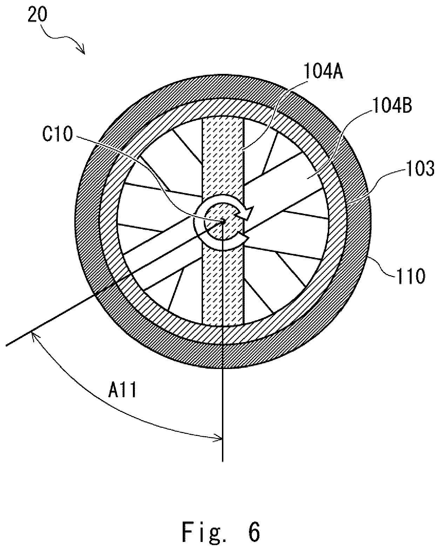

Next, the baffle plates 104 will be further described with reference to Fig. 6. Fig. 6 is a front cross-sectional view of the reaction apparatus according to the second embodiment. Fig. 6 is a cross-sectional view taken along a line VI-VI in Fig. 5, observed in a direction parallel to the central axis C10. In the kiln part 100 shown in the figure, a baffle plate 104A, which is shown in the cross section, and a baffle plate 104B adjacent to the baffle plate 104A form a twisting angle A11 around the central axis C10. Further, similarly, baffle plates 104 that are adjacent to one to another from the baffle plate 104B toward the discharge port 102 are also arranged in such a manner that they are twisted (i.e., circumferentially shifted) from one to another at the twisting angle A11.

The baffle plates 104 according to this embodiment have a function of properly conveying the raw material R10 by adopting the above-described helical arrangement. Note that each of the baffle plates 104 shown in Figs. 5 and 6 has, as an example, a rectangle-columnar shape in which its surface that comes into contact with the raw material R10 forms a flat surface. However, the shape of the baffle plates 104 is not limited to this example. For example, the baffle plates 104 may have a twisted rectangle-prism shape in order to efficiently convey the raw material R10. Further, each of the baffle plates 104 does not necessarily have to have a rectangular shape in the cross section perpendicular to the direction in which the baffle plate 104 extends.

Note that the helix formed by a plurality of baffle plates 104 does not necessarily have to be uniform in the kiln part 100. There is a relation between the lead angle of the helix formed by baffle plates 104 and the function of conveying the raw material R10 in the kiln part 100. The conveyance speed of the raw material R10 when the lead angle of the helix is relatively large is higher than the conveyance speed of the raw material R10 when the lead angle of the helix is relatively small. Therefore, for example, the kiln part 100 may be configured in such a manner that the lead angle in a first area near the supply port 101 (i.e., a first lead angle) is different from the lead angle in a second area that is farther from the supply port 101 and closer to the discharge port 102 than the first area is (i.e., a second lead angle). That is, the kiln part 100 may be configured in such a manner that the first lead angle of baffle plates 104 in the first area is larger than the second lead angle of baffle plates 104 in the second area.

By the above-described configuration, the reaction apparatus 20 can be set so that the conveyance speed near the supply port 101, where the temperature is less likely to be stabilized, is relatively high, while the conveyance speed in an area where the temperature is likely to be stabilized is relatively low. In this way, the reaction apparatus 20 according to the second embodiment can accelerate the reaction of the raw material R10 and thereby manufacture a reaction product more efficiently.

### <Third Embodiment>

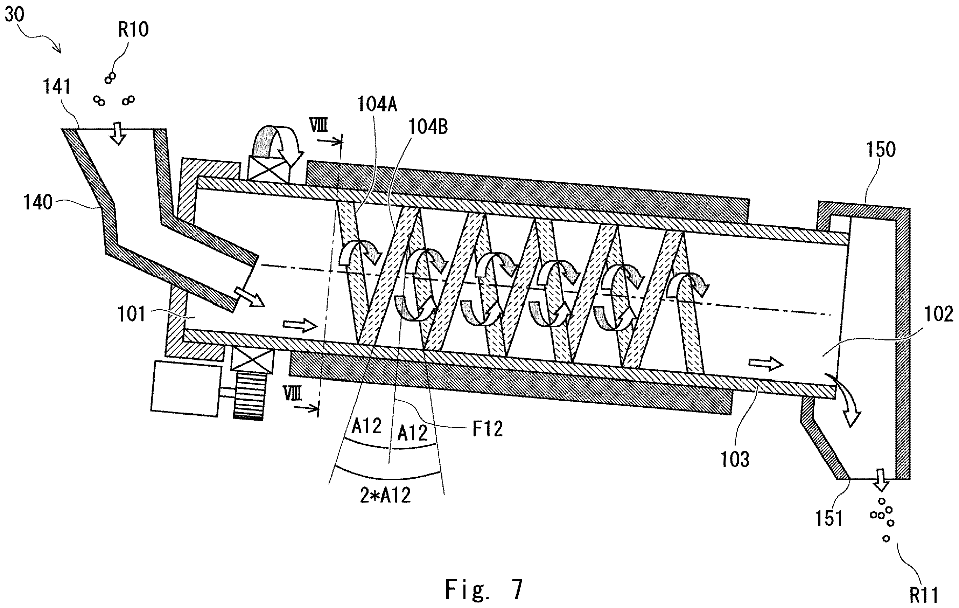

Next, a third embodiment will be described. Fig. 7 is a side cross-sectional view of a reaction apparatus 30 according to the third embodiment. In the reaction apparatus 30 shown in Fig. 7, the configuration of the baffle plates 104 is different from those of the above-described reaction apparatuses 10 and 20.

The baffle plates 104 shown in Fig. 7 form an inclination angle A12 with respect to a surface F12 perpendicular to the central axis C10. Further, baffle plates 104 adjacent to each other have inclination angles that are symmetric to each other with respect to the surface F12 in direction of the central axis C10. Therefore, two baffle plates 104 adjacent to each other form an angle 2*A12, i.e., an angle twice the inclination angle A12.

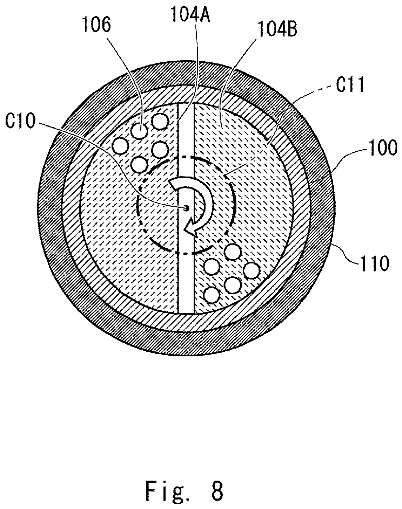

Next, the baffle plates 104 according to this embodiment will be further described with reference to Fig. 8. Fig. 8 is a front cross-sectional view of the reaction apparatus 30 according to the third embodiment. Fig. 8 is a cross-sectional view taken along a line VIII-VIII in Fig. 7, observed in a direction parallel to the central axis C10. Each of the baffle plates 104 according to this embodiment has a semicircular shape that closes an area of 1/3 or larger of the area inside the cylinder when the cylindrical part 103 is projected onto a plane perpendicular to the central axis C10. Further, the baffle plates 104 are formed so as to pass through the central area C11. Further, in the kiln part 100 shown in the figure, a baffle plate 104A, which is shown in the cross section, and a baffle plate 104B adjacent to the baffle plate 104A are rotationally symmetric to each other with respect to the central axis C10.

As described above, each of the baffle plates 104 according to this embodiment has a semicircular shape, and baffle plates 104 adjacent to each other are inclined in directions different from each other with respect to the plane perpendicular to the central axis C10. Further, the plurality of baffle plates 104 are arranged in alternate manner along the central axis C10, and are rotationally symmetric to each other with respect to the central axis C10. By the above-described configuration, the baffle plates 104 convey the raw material R10 while being in contact with the raw material R10. That is, the baffle plates 104 according to this embodiment are in contact with the raw material R10 and thereby properly heat (i.e., transfer heat to) the raw material R10, and properly convey the raw material R10.

Note that the inclination angle A12 formed by baffle plates 104 can be used as an index corresponding to the lead angle of the helical configuration. Therefore, in the kiln part 100 according to this embodiment, the conveyance speed in an area where the inclination angle A12 is set to a relatively large angle is higher than the conveyance speed in an area where the inclination angle A12 is set to a relatively small angle. Therefore, for example, the kiln part 100 may be configured in such a manner that the inclination angle in a first area near the supply port 101 (i.e., a first inclination angle) is different from the inclination angle in a second area that is distant from the supply port 101 and closer to the discharge port 102 than the first area is (i.e., a second inclination angle). That is, the kiln part 100 may be configured in such a manner that the first inclination angle of baffle plates 104 in the first area is larger than the second inclination angle of baffle plates 104 in the second area.

By the above-described configuration, the reaction apparatus 30 can be set so that the conveyance speed near the supply port 101, where the temperature is less likely to be stabilized, is relatively high, while the conveyance speed in an area where the temperature is likely to be stabilized is relatively low. In this way, the reaction apparatus 30 according to the third embodiment can accelerate the reaction of the raw material R10 and thereby manufacture a reaction product more efficiently.

Further, in the reaction apparatus 30 according to this embodiment, the baffle plates 104 come into contact with the raw material R10, raise the raw material R10, which is in contact with the baffle plates 104, and then drop the raised raw material R10. That is, the baffle plates 104 according to this embodiment also has a function of stirring the raw material R10. Therefore, the reaction apparatus 30 can accelerate the reaction of the raw material R10 by stirring the raw material R10.

Note that the baffle plate 104 shown in Fig. 8 includes a plurality of recesses 106 on the contact surface with which the raw material R10 comes into contact. Each of the recesses 106 is a spherical recess, and the diameter of the circle on the surface is larger than the particle diameter of the raw material R10. By including a plurality of recesses as described above, the surface area of the baffle plate 104 increases, so that the heat transferred from the heating part 110 is more likely to be radiated to the inside of the kiln part 100. Further, the raw material R10 comes into contact with the recesses 106, and is likely to be retained there. Therefore, the reaction apparatus 30 can efficiently accelerate the reaction of the raw material R10.

Note that the baffle plate 104 may include, instead of the recesses 106 or in addition to the recesses 106, holes which are larger than the particle diameter of the raw material R10 and hence which allow the raw material R10 to pass therethrough. By including holes as described above, the surface area of the baffle plate 104 increases. Further, by including holes as described above, the baffle plate 104 is more likely to come into contact with the raw material R10.

Further, the baffle plates 104 may include, instead of or in addition to the above-described structure, a plurality of protrusions on the contact surface thereof with which the raw material R10 comes into contact. By including the protrusions, the surface area of the baffle plate 104 increases. Further, by including the protrusions, the baffle plate 104 is more likely to come into contact with the raw material R10.

Further, in the reaction apparatus 30 according to this embodiment, when the baffle plate 104 (i.e., each of the baffle plates) includes a plurality of recesses larger than the particle diameter of the raw material R10 or a plurality of holes each of which is large enough to allow the raw material to pass therethrough, the kiln part 100 may have the following configuration. That is, the kiln part 100 may be set (i.e., formed) so that the number of recesses or holes formed in a baffle plate 104 formed in a third area near the discharge port 102 is larger than the number of recesses or holes formed in a baffle plate 104 formed in a fourth area farther from the discharge port 102 than the third area is. By the above-described configuration, in the kiln part 100, the raw material R10 is more likely to be retained in the fourth area, which is farther from the discharge port 102 than the third area located near the discharge port 102 is, and of which the temperature is more stable than in the third area. In this way, the reaction apparatus 30 can properly accelerate the reaction of the raw material R10.

The third embodiment has been described above. In the reaction apparatus 30 according to this embodiment, the baffle plates 104 properly radiate heat to the inside of the kiln part 100 and thereby heat the interior of the kiln part 100. Further, the baffle plates 104 properly convey the raw material R10. Further, the baffle plates 104 stir the raw material R10. According to the third embodiment, it is possible to provide a reaction apparatus and the like capable of efficiently manufacturing a desired product.

### <Fourth Embodiment>

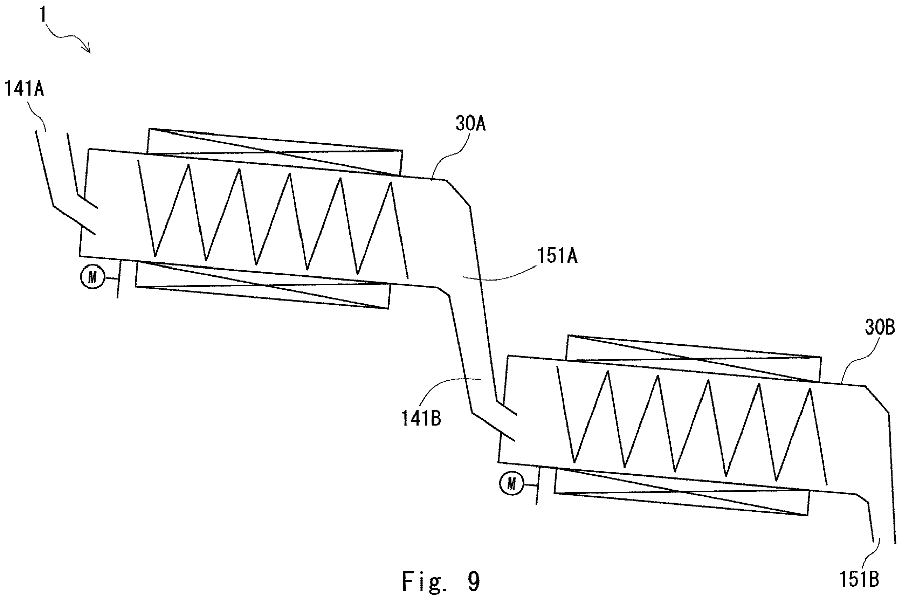

Next, a fourth embodiment will be described with reference to Fig. 9. Fig. 9 is a configuration diagram of a reaction system according to the fourth embodiment. Fig. 9 is a configuration diagram of a reaction system 1 according to the fourth embodiment. The reaction system 1 shown in Fig. 9 is a system in which two reaction apparatuses 30, i.e., a first reaction apparatus 30A and a second reaction apparatus 30B, are connected in series. Fig. 9 schematically shows a state in which the first and second reaction apparatus 30A and 30B are connected to each other. In the reaction system 1, a reaction product outlet 151A for a reaction product, provided in the first reaction apparatus 30A is connected to a raw material charging port 141B provided in the second reaction apparatus 30B.

The first reaction apparatus 30A shown in Fig. 1 generates a reaction product A by applying a predetermined physical stimulus A to a raw material R10 received from the raw material charging port 141A. The first reaction apparatus 30A discharges the generated reaction product A from the reaction product outlet 151A.

A second fluid control area 140A receives the reaction product A discharged from the reaction product outlet 151A of the first reaction apparatus 30A at the raw material charging port 141B. The second reaction apparatus 30B generates a reaction product B from the reaction product A by applying a predetermined physical stimulus B to the reaction product A. The second reaction apparatus 30B discharges the generated reaction product B from the reaction product outlet 151B.

The fourth embodiment has been described above. Note that in the above-described reaction system 1, needless to say, one or both of the first and second reaction apparatuses 30A and 30B may be the reaction apparatus 10 or 20. Further, the reaction system 1 may be one in which three or more reaction apparatus are connected to one another. By the above-described configuration, the reaction system 1 according to the fourth embodiment can continuously apply a plurality of physical stimuli to the raw material. Further, by the above-described configuration, the reaction system 1 makes it possible to flexibly arrange the system itself and to configure a flexible system. That is, according to the fourth embodiment, it is possible to provide a reaction system that efficiently manufactures a desired product the manufacturing of which requires a plurality of reactions.

### <Fifth Embodiment>

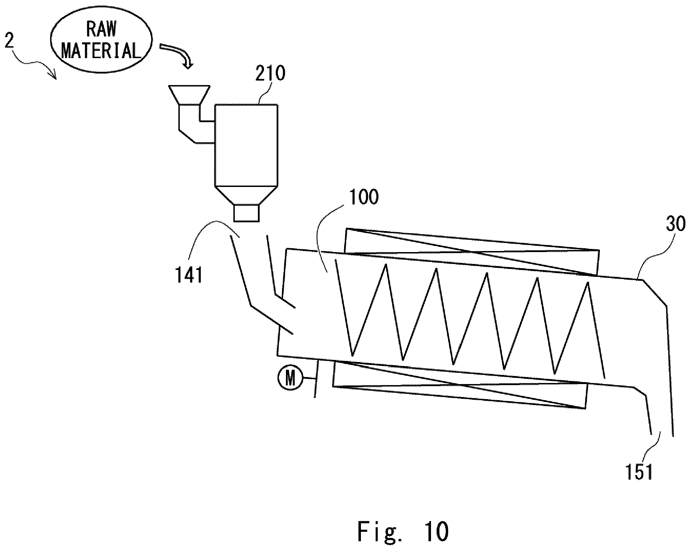

Next, a fifth embodiment will be described with reference to Fig. 10. Fig. 10 is a configuration diagram of a reaction system according to the fifth embodiment. A reaction system 2 shown in Fig. 10 includes, as its main components/structures, a granulating apparatus 210 and a reaction apparatus 30.

The granulating apparatus 210 manufactures a granulated product by applying a pressure to a granular raw material. As the granulated product, a granular substance having a particle size of several millimeters to several tens of millimeters is manufactured by applying a pressure to a granular substance having a particle size of several tens of microns to several hundreds of microns and thereby coagulating particles. The granulating apparatus 210 supplies the manufactured granular substance to the raw material charging port 141.

When the reaction apparatus 30 receives the granular substance at the raw material charging port 141, it supplies the received granular substance to the kiln part 100. The reaction apparatus 30 applies a predetermined physical stimulus to the received granular substance and thereby generates a reaction product. When the reaction product is generated, the reaction apparatus 30 discharges the generated reaction product from the reaction product outlet 151.

The fifth embodiment has been described above. The reaction system 2 according to this embodiment applies a pressure to a raw material in the granulating apparatus 210, and then stirs the raw material while heating it in the reaction apparatus 30. In this way, the reaction system 2 can continuously manufacture, for example, an oxide-based solid electrolyte or a sulfide-based solid electrolyte. That is, according to the fifth embodiment, it is possible to efficiently and continuously manufacture a desired reaction product.

### <Sixth Embodiment>

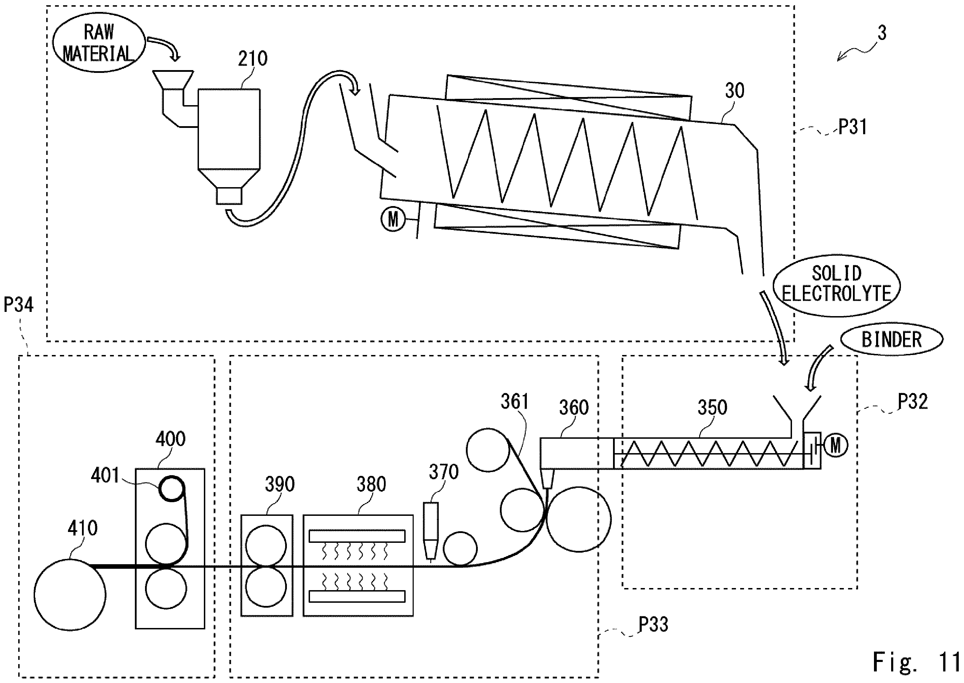

Next, a sixth embodiment will be described. Fig. 11 is a configuration diagram of a battery material manufacturing system 3 according to the sixth embodiment. The battery material manufacturing system 3 shown in Fig. 11 is, for example, a system for manufacturing a negative electrode sheet of a solid-state secondary battery. The battery material manufacturing system 3 includes, as its main components/structures, a first process area P31, a second process area P32, a third process area P33, and a fourth process area P34. That is, the battery material manufacturing system 3 manufactures a battery material through the above-described first, second, third, and fourth processes.

In an example shown below, a negative electrode sheet containing a negative electrode active material is manufactured by using the battery material manufacturing system 3. In the first process area P31, the battery material manufacturing system 3 manufactures a solid electrolyte, which is the negative electrode active material. The first process area P31 includes, as its main components/structures, a granulating apparatus 210 and a reaction apparatus 30.

In the first process area P31, the granulating apparatus 210 receives a granular raw material, and applies a pressure to manufacture a tablet-like granular substance. The granulating apparatus 210 supplies the manufactured granular substance to the reaction apparatus 30. The reaction apparatus 30 manufactures a solid electrolyte by stirring the received granular substance while heating it. The reaction apparatus 30 supplies the manufactured solid electrolyte to the second process area P32.

In the second process area P32, the battery material manufacturing system 3 mixes the solid electrolyte with a binder resin. The second process area P32 includes an extruder 350. The extruder 350 receives the solid electrolyte generated in the first process area P31 together with the separately-supplied binder resin, and thereby manufactures a kneaded material by mixing and kneading the received solid electrolyte and the binder resin. The extruder 350 supplies the manufactured kneaded material to the third process area P33.

In the third process area P33, the battery material manufacturing system 3 receives the kneaded material from the second process area P32 and manufactures a negative electrode sheet from the received kneaded material. The third process area P33 includes, as its main components/structures, an extrusion molding machine 360, a coater 370, a dryer 380, and a rolling mill 390.

The extrusion molding machine 360 receives the kneaded material from the extruder 350, and continuously manufactures a sheet-like molded product by extruding the received kneaded material. In this process, in the third process area P33, an integrated product may be manufactured by combining a base material 361 such as a nonwoven fabric with the sheet extruded from the extrusion molding machine 360. That is, the third process area P33 includes a sheet manufacturing apparatus. Note that the extrusion molding machine 360 may be referred to as a kneaded material manufacturing apparatus.

Next, the coater 370 applies a predetermined protective film or the like (i.e., a material for forming a predetermined protective film or the like) to the surface of the molded product. Further, the dryer 380 dries the molded product, on which the coating of the predetermined protective film or the like has been formed, and supplies the dried molded product to the rolling mill 390. The rolling mill 390 rolls the dried molded product and supplies the rolled product to the fourth process area P34.

In the fourth process area P34, the battery material manufacturing system 3 performs a step of bonding a predetermined sheet to the rolled product and winding the rolled produce with the predetermined sheet bonded thereto. The fourth process area P34 includes, as its main components/structures, a laminator 400 and a winding machine 410. The laminator 400 laminates (i.e., bonds) an electrolyte sheet 401 (or an electrode sheet) containing a positive electrode active material over the sheet-like molded product supplied from the rolling mill 390, and supplies the laminated product to the winding machine 410. The winding machine 410 winds the electrolyte sheet supplied from the laminator 400.

The configuration of the battery material manufacturing system 3 and the battery material manufacturing method performed by the battery material manufacturing system 3 have been described above. The battery material manufacturing system 3 according to this embodiment can consistently and efficiently manufacture a reaction product, such as a solid electrolyte, the manufacturing of which requires a plurality of reactions, and continuously manufacture a sheet using the manufactured reaction product. Note that the battery material manufacturing system 3 according to this embodiment is not limited to the one shown in Fig. 11. For example, the battery material manufacturing system 3 does not necessarily have to have the laminator 400 in the fourth process area P34.

Further, the system shown in Fig. 11 may also manufacture a predetermined material other than the battery material. That is, the system shown in Fig. 11 may be referred to as a material manufacturing system or a solid electrolyte manufacturing system. Further, the method performed by this material manufacturing system may also be referred to as a material manufacturing method.

Further, as described above, the battery material manufacturing system 3 shown in Fig. 11 can manufacture a negative electrode sheet in the third process area P33 and laminate an electrolyte sheet including a positive electrode sheet in the fourth process area P34. In this way, the battery material manufacturing system 3 can manufacture a battery. That is, in this case, the system shown in Fig. 11 can be referred to as a battery manufacturing system, and the method performed by the system shown in Fig. 11 can be referred to as a battery manufacturing method.

As described above, according to the sixth embodiment, it is possible to provide a system or a method for efficiently manufacturing a desired battery material, a battery, or a predetermined material.

Note that the present invention is not limited to the above-described embodiments, and they can be modified as appropriate without departing from the scope and spirit of the invention.

This application is based upon and claims the benefit of priority from Japanese patent application No. 2021-130117, filed on August 6, 2021, the disclosure of which is incorporated herein in its entirety by reference.

### Reference Signs List

- 1: REACTION SYSTEM
- 2: REACTION SYSTEM
- 3: BATTERY MATERIAL MANUFACTURING SYSTEM
- 10: REACTION APPARATUS
- 20: REACTION APPARATUS
- 30: REACTION APPARATUS
- 100: KILN PART
- 101: SUPPLY PORT
- 102: DISCHARGE PORT
- 103: CYLINDRICAL PART
- 104: BAFFLE PLATE
- 105: DRIVEN PART
- 106: RECESS
- 110: HEATING PART
- 111: FLOW PATH
- 112: HEATING FLUID CIRCULATION PART
- 120: DRIVING PART
- 121: DRIVING FORCE TRANSMISSION PART
- 130: HOOD
- 140: FEEDER
- 141: RAW MATERIAL INPUT PORT
- 150: KILN FOOT
- 151: REACTION PRODUCT OUTPUT PORT
- 210: GRANULATING APPARATUS
- 350: EXTRUDER
- 360: EXTRUSION MOLDING MACHINE
- 361: BASE MATERIAL
- 370: COATER
- 380: DRYER
- 390: ROLLING MILL
- 400: LAMINATOR
- 401: ELECTROLYTE SHEET
- 402: NEGATIVE ELECTRODE SHEET
- 410: WINDING MACHINE
- A10: LEAD ANGLE
- C10: CENTRAL AXIS
- C11: CENTRAL AREA
- C12: HELIX
- R10: RAW MATERIAL
- R11: REACTION PRODUCT

## Claims

1. A reaction apparatus comprising:
a kiln part comprising a supply port configured to receive a raw material supplied to one end side thereof, a discharge port configured to discharge a reaction product to another end side thereof, a cylindrical part extending along and rotatable around a central axis thereof, and a baffle plate provided so as to extend from an inner wall of the cylindrical part and pass through a central area of the cylindrical part including the central axis thereof;
a driving part configured to rotate the kiln part around the central axis; and
a heating part configured to heat an outer peripheral part of the kiln part, wherein
the kiln part is configured so that a received predetermined raw material is conveyed to the discharge port along the central axis while being in contact with the baffle plate.

2. The reaction apparatus according to claim 1, wherein the baffle plate forms a beam extending across the central axis so as to connect two opposing parts on the inner wall to each other.

3. The reaction apparatus according to claim 1, wherein the baffle plate closes an area of 1/3 or larger of an area inside the cylinder when the cylinder is projected onto a plane perpendicular to the central axis.

4. The reaction apparatus according to any one of claims 1 to 3, wherein the baffle plate includes a plurality of projections on a contact surface thereof with which the raw material comes into contact.

5. The reaction apparatus according to any one of claims 1 to 4, wherein the baffle plate includes a plurality of recesses larger than a particle diameter of the raw material on a contact surface thereof with which the raw material comes into contact.

6. The reaction apparatus according to any one of claims 1 to 5, wherein the baffle plate includes a plurality of holes each having such a size that the raw material is able to pass therethrough.

7. The reaction apparatus according to any one of claims 1 to 4, wherein
the baffle plate includes a plurality of recesses larger than a particle diameter of the raw material or a plurality of holes each having such a size that the raw material is able to pass therethrough, and
the kiln part is set so that the number of recesses or holes formed in the baffle plate formed in a third area near the discharge port is larger than the number of recesses or holes formed in the baffle plate formed in a fourth area farther from the discharge port than the third area is.

8. The reaction apparatus according to any one of claims 1 to 7, wherein a plurality of baffle plates are formed in a helical manner on the inner wall of the kiln part.

9. The reaction apparatus according to claim 8, wherein the kiln part is configured so that a first lead angle of the baffle plates helically formed in a first area near the supply port is larger than a second lead angle of the baffle plates helically formed in a second area that is farther from the supply port than the first area is.

10. The reaction apparatus according to any one of claims 1 to 9, wherein the baffle plate includes, inside thereof, a circulation path through which a fluid of which a temperature is controlled by the heating part is circulated.

11. The reaction apparatus according to any one of claims 1 to 10, wherein the baffle plate is formed by a member of which a contact surface that comes into contact with the raw material contains carbon or ceramic.

12. The reaction apparatus according to any one of claims 1 to 11, wherein the baffle plate includes a member mainly composed of a metal in an inner layer of a contact surface that comes into contact with the raw material.

13. The reaction apparatus according to any one of claims 1 to 12, wherein the heating part can raise an internal temperature of the kiln part from a room temperature to 1,500°C.

14. The reaction apparatus according to any one of claims 1 to 13, wherein in the kiln part, a direction in which the cylindrical part extends is inclined from a horizontal direction in a range from -90 degrees to +90 degrees.

15. A reaction system wherein a first reaction apparatus and a second reaction apparatus are connected in series, the first reaction apparatus being one according to any one of claims 1 to 14.

16. A reaction system comprising:
a granulating apparatus configured to manufacture a granulated product by applying a pressure to a raw material; and
a reaction apparatus according to any one of claims 1 to 14, the reaction apparatus being configured to receive the granulated product and manufacture a reaction product.

17. A battery material manufacturing system comprising:
a reaction apparatus according to any one of claims 1 to 14, the reaction apparatus being configured to manufacture a solid electrolyte as a reaction product;
a kneaded material manufacturing apparatus configured to manufacture a kneaded material by mixing and kneading the solid electrolyte and a binder resin and continuously extruding them; and
a sheet manufacturing apparatus configured to mold the kneaded material into a sheet and thereby manufacturing an electrolyte sheet.

18. A battery manufacturing system comprising:
the battery material manufacturing system according to claim 17; and
a laminator configured to laminate an electrode sheet containing a positive electrode active material over the electrolyte sheet manufactured by the battery material manufacturing system.

19. A solid electrolyte manufacturing system comprising:
a reaction apparatus according to any one of claims 1 to 14, the reaction apparatus being configured to manufacture a solid electrolyte as a reaction product;
a kneaded material manufacturing apparatus configured to manufacture a kneaded material by mixing and kneading the solid electrolyte and a binder resin and continuously extruding them; and
a sheet manufacturing apparatus configured to mold the kneaded material into a sheet and thereby manufacturing a sheet-like solid electrolyte.

20. A reaction product manufacturing method comprising the steps of:
preparing a kiln part including a supply port configured to receive a raw material supplied to one end side thereof, a discharge port configured to discharge a reaction product to another end side thereof, a cylindrical part extending along and rotatable around a central axis thereof, and a baffle plate provided so as to extend from an inner wall of the cylindrical part and pass through a central area of the cylindrical part including the central axis thereof;
heating an interior of the kiln part to a predetermined temperature;
supplying the raw material from the supply port;
rotating the kiln part around the central axis, and thereby conveying the raw material along the center axis to the discharge port while keeping the raw material in contact with the baffle plate; and
discharging the reaction product from the discharge port.
